# EUROPÄISCHE PATENTANMELDUNG

(11) **EP 1 691 464 A1**
(43) Veröffentlichungstag der Anmeldung: **16.08.2006**
(21) Anmeldenummer: 06002806.5
(22) Anmeldetag: 13.02.2006
(51) Int. Cl.: H02J 7/00

(54) **System, bestehend aus mehreren unterschiedlichen, elektrisch betriebenen und mit einem Niederspannungs-Akkumulator versehenen Werkzeugen**

(30) Priorität: 11.02.2005 DE 202005002311 U
(71) Anmelder: Schütz-Dental GmbH, 61191 Rosbach (DE)
(72) Erfinder: Kranjc, Josef, 61231 Bad Nauheim (DE)
(74) Vertreter: Hebing, Norbert

(57) **Zusammenfassung**

Die Erfindung bezieht sich auf ein System, das aus mehreren zahnmedizinischen, eine eigene Steuerung aufweisenden Werkzeugen besteht, die bisher üblicherweise mit einem Kabel an ein Hochspannungsnetz von 110 bzw. 220 Volt angeschlossen wurden. Die Erfindung beruht auf dem Problem, auch bei Werkzeugen, die einen erhöhten Steueraufwand haben, eine Systemkonfiguration zu schaffen, mit der es ermöglicht wird, die Geräte kabelfrei zu betreiben.

Die Erfindung sieht dazu vor, dass die Werkzeuge programmierbar sind, dass jedem Werkzeug eine Basisstation (5, 5', 5'') zugeordnet ist, mit der es elektrisch koppelbar ist, wobei in gekoppeltem Zustand ein Ladestrom sowie elektrische Signale zur Programmierung des jeweiligen Gerätes übertragen werden, und dass die Basisstation (5, 5', 5'') mit der Ladestation (1) lösbar verbunden ist, wobei eine elektrische verbindung zum Transformator (4) der Ladestation (1) hergestellt wird, um die Basisstation (5, 5', 5'') mit einer Niederspannung zu versorgen.

Die Basisstation enthält zumindest einen Teil der Steuerung des Gerätes, so dass die notwendigen Parameter zum Betrieb des Gerätes hier eingestellt werden können und als feste Größen in entsprechende überschreibbare Speicher im Gerät übertragen werden.

## Beschreibung

Die Erfindung bezieht sich auf ein System, bestehend aus mehreren unterschiedlichen, elektrisch betriebenen und mit einem Niederspannungs-Akkumulator versehenen Werkzeugen gemäß dem Oberbegriff des Anspruchs 1.

Derartige Systeme sind bekannt. Zum Beispiel besitzen elektrische Zahnbürsten einen 12-V-Elektromotor und einen Akkumulator, der an einer Ladestation aufgeladen werden kann, so dass die Zahnbürste schnurfrei benutzt werden kann.

Auch in der modernen Zahnmedizin wird eine Vielzahl von elektrisch angetriebenen Werkzeugen eingesetzt. Hierbei handelt es sich zum Beispiel um optische Werkzeuge, wie zum Beispiel einen Laser, Bohrer und andere chirurgische Werkzeuge. Bisher werden diese Werkzeuge an ein Hochspannungsnetz von 110 bzw. 220 Volt angeschlossen, wobei häufig die Transformation der Hochspannung zu einer Niederspannung im Werkzeug selbst erfolgt, was den Nachteil hat, dass das Gerät ein hohes Gewicht besitzt. Außerdem besteht das Problem, die durch die Transformation entstehenden, elektromagnetischen Strahlungen sicher abschirmen zu müssen. Generell kann daran gedacht werden, auch diese Werkzeuge ähnlich wie die oben erwähnte elektrische Zahnbürste jeweils mit einer Ladestation zu verbinden. Es kommt allerdings das Problem hinzu, dass die erwähnten Werkzeuge der Zahnmedizin in der Regel eine aufwändige Steuerung benötigen, mit der zum Beispiel die Impulsdauer von Laserlicht oder die Drehzahl von rotierenden Antrieben eingestellt werden müssen. Die Gerätesteuerung benötigt im Gerät Platz und zusätzliche elektrische Energie, die zu einer zusätzlichen Belastung des Akkumulators führt, so dass für solche Geräte häufig doch eine Stromversorgung über eine Leitung bereitgestellt wird.

Die Erfindung beruht somit auf dem Problem, auch bei Werkzeugen, die einen erhöhten Steueraufwand haben, eine Systemkonfiguration zu schaffen, mit der es möglich ist, die Geräte auch kabelfrei zu betreiben.

Zur Lösung des Problems sieht die Erfindung vor, dass den programmierbaren Werkzeugen jeweils eine Basisstation zugeordnet ist, mit der es elektrisch koppelbar ist, wobei im gekoppelten Zustand ein Ladestrom sowie ein elektrisches Signal zur Programmierung des jeweiligen Gerätes übertragen ist und dass die Basisstation mit der Ladestation lösbar verbunden ist, wobei eine elektrische Verbindung zum Transformator der Ladestation hergestellt wird, um die Basisstation mit einer Niederspannung zu versorgen.

Diese Anordnung hat zunächst den Vorteil, dass eine zentrale Ladestation vorhanden ist, die über einen ausreichend großen und leistungsfähigen Transformator verfügt, um die angeschlossene Basisstation bzw. die Geräte mit Strom versorgen zu können. Die Abschirmung gegen elektromagnetische Strahlungen kann bei dieser Ladestation relativ einfach erfolgen.

Eine Basisstation dient dazu, einerseits die Verbindung der Ladestation zu dem Akkumulator im Gerät herzustellen, um dieses laden zu können, andererseits enthält die Basisstation zumindest einen Teil der Steuerung des Geräts, so dass die notwendigen Parameter zum Betrieb des Geräts hier eingestellt werden können und als feste Größen in entsprechende überschreibbare Speicher im Gerät übertragen werden. Im Gerät selbst verbleibt nur die Steuerung derjenigen Größen, die im aktuellen Betrieb eines solchen Gerätes laufend angepasst werden müssen.

Die Energie verzehrenden Elemente im Gerät können somit auf ein Minimum reduziert werden, so dass auch entsprechend kleinere Akkumulatoren eingesetzt werden können und damit das Gerät insgesamt leicht wird bzw. bei einer größeren Kapazität der Akkumulatoren eine längere Benutzungsdauer ermöglicht wird.

Die Ladestation kann nun so ausgelegt werden, dass sie zur gleichzeitigen Verbindung mit mehreren Stationen ausgelegt ist, so dass über dieses System zentral mehrere Geräte versorgt werden können. Eine besonders geeignete Ausgestaltung der Basisstation sieht vor, dass diese eine Stellfläche besitzt, auf der die einzelnen Basisstationen aufgestellt sind und in denen ein elektrischer Kontakt zwischen der Ladestation und der Basisstation hergestellt wird. Das System ist damit beliebig erweiterbar. Die Energieversorgung der Werkzeuge kann einerseits induktiv erfolgen. Bei Geräten, die von ihrer Art her einen hohen Stromverbrauch haben, wird man allerdings auch eine Kabelverbindung zwischen der Basisstation und dem Gerät vorsehen müssen.

Da wie erläutert jede Basisstation einen Teil der Programmierung des Gerätes übernimmt, sieht die Erfindung vor, dass die Basisstation über eine Anzeige sowie mindestens ein Einstellmittel verfügt. Dies erlaubt es dem Benutzer, entsprechende Einstellungen an der Basisstation vorzunehmen, die dann beim Verbinden des Geräts mit der Basisstation, sei es über Kabel, sei es induktiv, übertragen werden. Da jede Art von Gerät eine andere Art der Steuerung benötigt, wird man in der Regel für jede Geräteart eine Basisstation benötigen. Allerdings kann auch bei ähnlichen Geräten daran gedacht werden, eine einzige Basisstation vorzusehen, wobei Erkennungsmittel vorhanden sind, die es den Basisstationen erlauben, festzustellen, welches Gerät mit ihr kommuniziert, und daraufhin dem Benutzer ein passendes Einstellprogramm zur Verfügung zu stellen.

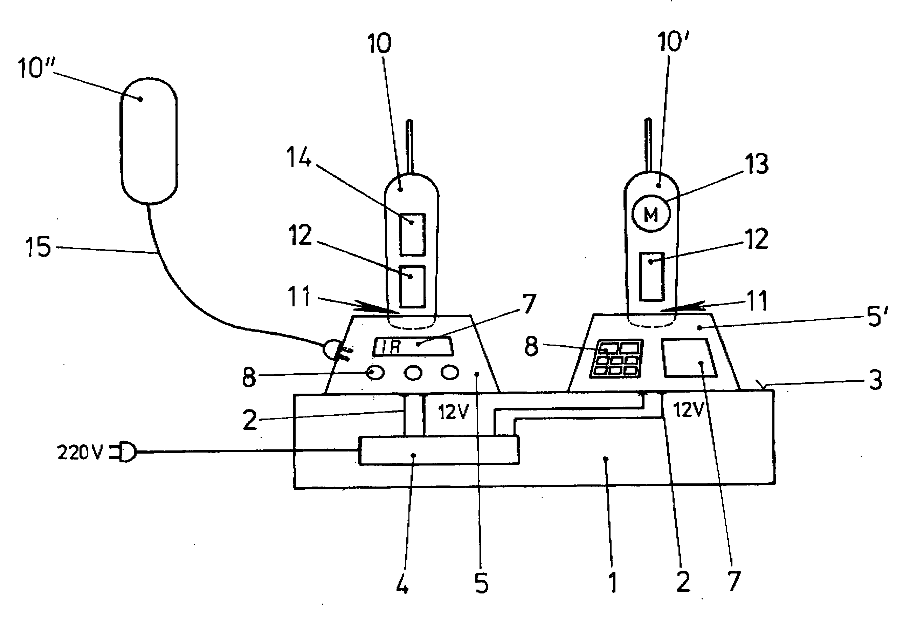

Im Folgenden soll anhand eines Ausführungsbeispiels die Erfindung näher erläutert werden. Dazu zeigt die einzige Figur schematisch den Aufbau des Systems.

Das System besteht aus einer Ladestation 1, die über ein Kabel an einer Hochspannungsversorgung, z. B. an 220 Volt, angeschlossen ist. In dem Ladegerät 1 befindet sich ein Transformator 4, der die Hochspannung von 220 Volt auf ca. 12 oder 24 Volt transformiert. Diese Niedervoltspannung wird an Kontakten 2 an der Oberfläche 3 des Ladegeräts 1 zur Verfügung gestellt. Auf der Oberseite 3 des Ladegeräts 1 können mehrere Basisstationen 5, 5' aufgestellt werden, die an ihrer Unterseite über entsprechende Kontakte verfügen, die zu den Kontakten 2 an der Oberseite des Ladegerätes 1 passen. Die Basisgeräte 5, 5' verfügen in der Regel über eine Anzeige 7, über Einstellmittel 8 sowie über ein hier nicht dargestelltes elektronisches Steuergerät, das aufgrund der Einstellung des Benutzers entsprechende Einstellsignale dem jeweiligen Gerät zur Verfügung stellt.

Jede Basisstation kann mit einem oder mehreren, ähnlich gearteten Geräten 10, 10' jeweils über eine induktive Schnittstelle 11 kommunizieren. Jedes Gerät 10, 10' besitzt zumindest einen Akkumulator 12 und einen Energieverbraucher, z. B. einen Antriebsmotor 13 oder einen Laser 14, wobei der Akkumulator 12 über die induktive Schnittstelle 11 geladen wird.

Die Schnittstelle 11 dient außerdem zur Übertragung der vorher erwähnten Stellsignale, die in entsprechenden Speichern im jeweiligen Gerät 10, 10' abgelegt sind und den Betrieb des Gerätes steuern. Hierbei kann es sich je nach Art des Gerätes 10, 10' z. B. um die Festlegung von Impulsdauern bei einem Laser oder um Drehzahlprofile für Antriebsmotore handeln.

Bei Geräten 10'', die einen sehr hohen Stromverbrauch haben, kann die Verbindung alternativ auch über ein Kabel 15 erfolgen.

Der wesentliche Vorteil dieses Systems besteht somit darin, dass eine zentrale Ladestation 1 vorhanden ist und dass in den Basisstationen 5, 5' zumindest eine Teilprogrammierung für den Betrieb der einzelnen Geräte 10, 10', 10'' erfolgt. Einmal im Besitz einer Ladestation 1, kann der Benutzer die von ihm benötigten Geräte 10, 10', 10'' mit dieser Ladestation 1 koppeln, und zwar unter Zwischenschaltung von Basisstationen 5, 5', die es erlauben, zumindest einen Teil der Programmierung der Steuerung der Geräte extern vorzusehen, so dass die Geräte selbst die dafür notwendigen Komponenten (elektronische Bausteine, Einstellmittel, Anzeigen) nicht benötigen.

### Bezugszeichenliste

- 1: Ladestation
- 2: Kontakt
- 3: Oberfläche
- 4: Transformator
- 5: Basisstation
- 6:
- 7: Anzeige
- 8: Einstellmittel
- 9: Steuergerät
- 10: Gerät
- 11: Schnittstelle
- 12: Akkumulator
- 13: Antriebsmotor
- 14: Laser
- 15: Kabel

## Patentansprüche

1. System bestehend aus mehreren unterschiedlichen, elektrisch betriebenen und mit einem Niederspannungs-Akkumulator versehenen Werkzeugen, sowie einer an ein Hochspannungsnetz anschließbaren, einen Transformator aufweisenden Ladestation, **dadurch gekennzeichnet, dass** die Werkzeuge programmierbar sind, dass jedem Werkzeug eine Basisstation (5, 5', 5'') zugeordnet ist, mit dem es elektrisch koppelbar ist, wobei in gekoppeltem Zustand ein Ladestrom sowie elektrische Signale zur Programmierung des jeweiligen Geräts übertragen werden, und dass die Basisstation (5, 5', 5'') mit der Ladestation (1) lösbar verbunden ist, wobei eine elektrische Verbindung zum Transformator der Ladestation (1) hergestellt wird, um die Basisstation (5, 5', 5'') mit einer Niederspannung zu versorgen.

2. System nach Anspruch 1, **dadurch gekennzeichnet, dass** die Ladestation (1) zur gleichzeitigen Verbindung mit mehreren Basisstationen (5, 5', 5'') ausgelegt ist.

3. System nach Anspruch 2, **dadurch gekennzeichnet, dass** die Ladestation (1) eine Stellfläche aufweist, auf der die Basisstationen (5, 5', 5'') aufgestellt sind.

4. System nach Anspruch 1, **dadurch gekennzeichnet, dass** beim Gebrauch der Werkzeuge diese zur Stromversorgung über ein Kabel (15) mit der Basisstation (5, 5', 5'') verbindbar sind.

5. System nach einem der vorhergehenden Ansprüche, **dadurch gekennzeichnet, dass** die elektrische Verbindung zwischen der Basisstation (5, 5', 5'') und dem Werkzeug induktiv erfolgt.

6. System nach einem der vorhergehenden Ansprüche, **dadurch gekennzeichnet, dass** die Basisstation (5, 5', 5'') über eine Anzeige (7) sowie mindestens ein Einstellmittel (8) verfügt.

7. System nach einem der vorhergehenden Ansprüche, **dadurch gekennzeichnet, dass** die Basisstation (5, 5', 5'') derart eingerichtet ist, dass sie in der Lage ist, mit unterschiedlichen Werkzeugen zu kommunizieren, und dass Erkennungsmittel vorhanden sind, die es der Basisstation (5, 5', 5'') erlauben, die Art des mit ihr gekoppelten Systems zu erkennen.
